# EUROPEAN PATENT APPLICATION

(11) **EP 4 391 209 A1**
(43) Date of publication of application: **26.06.2024**
(21) Application number: 21968640.9
(22) Date of filing: 24.12.2021
(51) Int. Cl.: H01M 50/588, H01M 50/502

(54) **END PLATE, BATTERY MODULE, BATTERY, ELECTRIC DEVICE, AND METHOD FOR MANUFACTURING END PLATE**

(71) Applicant: Contemporary Amperex Technology Co., Limited, Ningde, Fujian 352100 (CN)
(72) Inventor: LIU, Xuan, Ningde, Fujian 352100 (CN); RUAN, Shengshen, Ningde, Fujian 352100 (CN)
(74) Representative: Gong, Jinping
(86) International application number: PCT/CN2021/141034
(87) International publication number: WO 2023/115500

(57) **Abstract**

The embodiment of the present application provides an end plate, a battery module, a battery, an electric device, and a manufacturing method of an end plate. The end plate is applied to the battery module, and includes: a main body portion, where the main body portion is arranged at two ends of the battery module and is configured to fix a battery cell in the battery module; a base, where the base is configured to fix an output electrode of the battery module; and a separation portion, where the separation portion is located in the main body portion and is configured to separate the main body portion from the base. The technical solution of the embodiment of the present application can make the main body portion of the end plate to be tightly integrated with the base for fixing the output electrode, and ensure that the end plate has excellent appearance.

## Description

### TECHNICAL FIELD

The present application relates to the field of batteries, and more particularly, to an end plate, a battery module, a battery, an electric device, and a manufacturing method of an end plate.

### BACKGROUND

A battery module generally includes a plurality of battery cells, end plates located at two ends of the battery cells, and side plates located at two sides of the battery cells. The end plates are fixedly connected to the side plates to clamp the battery cells. An output electrode and an output electrode base of a battery are together arranged on the end plate, and an electrical signal in a battery module is transmitted to an outside of the battery module through the output electrode.

### SUMMARY

The embodiment of the present application provides an end plate, a battery module, a battery, an electric device, and a manufacturing method of an end plate, can reduce an assembly interface between an end plate and a base for fixing an output electrode can be reduced, a cost can be reduced, and excellent appearance of the end plate is guaranteed.

In a first aspect, an end plate for a battery module is provided, including: a main body portion, where the main body portion is arranged at two ends of the battery module and is configured to fix a battery cell in the battery module; a base, where the base is configured to fix an output electrode of the battery module; and a separation portion, where the separation portion is located in the main body portion and is configured to separate the main body portion from the base.

In the end plate of the embodiment of the present application, because a separation portion to separate the main body portion from the base is arranged in the main body portion, under a blocking action of the separation portion, a material for making the base can be connected to the main body portion through injection-molding, which can eliminate an assembly interface and gap between the base and the main body portion, make the base and the main body tightly and firmly connected, and avoid a cost of assembling a base manufactured separately; and the material of the base will not overflow to a position below the separation portion in the main body portion, which can ensure that the end plate as a whole has excellent smooth appearance.

In some embodiments, the main body portion is made of a metallic material, and/or the base is made of a plastic material. The main body portion made of a metallic material has a high strength and can resist an expansion force of a high cycle number inside the battery module. The base made of a plastic material can reduce a manufacturing cost of the end plate.

In some embodiments, the main body portion includes a groove, and the separation portion is located in the groove; and the base includes a connection portion, and the connection portion abuts against the separation portion and is fixedly connected to the main body portion. Since the separation portion is located in the groove, when the base is connected through injection-molding to the main body portion, a material of the base enters the groove and touches the separation portion, and after molding, a part of the material that enters the groove becomes the connection portion, thereby allowing fixed connection to the main body portion.

In some embodiments, a step portion is provided in the groove, and the separation portion abuts against the step portion. By arranging the step portion and allowing the separation portion to abut against the step portion, the separation portion can be easily arranged in the groove, which facilitates the connection of the base to the main body portion.

In some embodiments, the base includes a positive electrode base, a negative electrode base, and a base body, where the positive electrode base and the negative electrode base are respectively arranged at two ends of the base body in a length direction of the end plate, and the positive electrode base, the negative electrode base, and the base body are integrally formed. Compared with the structure in which the positive electrode base, the negative electrode base, and the base body are separated from each other in the prior art, the integral formation of the positive electrode base, the negative electrode base, and the base body can not only eliminate an assembly interface and an assembly gap to allow tight connection, but also reduce a manufacturing cost.

In some embodiments, the groove includes a first groove, a second groove, and a third groove corresponding to the positive electrode base, the negative electrode base, and the base body, respectively. By arranging the first groove, the second groove, and the third groove corresponding to the positive electrode base, the negative electrode base, and the base body, respectively, the positive electrode base, the negative electrode base, and the base body can be accurately connected to predetermined positions of the main body portion when the base is formed and connected to the main body portion; and the arrangement of the plurality of grooves makes a plurality of connection structures formed between the base and the main body portion, which can make the base and the main body portion tightly connected.

In some embodiments, the separation portion includes a first separation portion, a second separation portion, and a third separation portion; and the first separation portion is located in the first groove, the second separation portion is located in the second groove, and the third separation portion is located in the third groove. Thus, the first separation portion closes the first groove, the second separation portion closes the second groove, and the third separation portion closes the third groove. Since arrangement positions of a positive output electrode, a negative output electrode, and a cell connection system (CCS) in different battery modules are determined according to different requirements, arrangement positions of a positive electrode base, a negative electrode base, and a base body for fixing the positive output electrode, the negative output electrode, and the CCS are determined according to the requirements. Therefore, the first separation portion, the second separation portion, and the third separation portion may be located at different positions in the first groove, the second groove, and the third groove, respectively. Due to this arrangement, when the base is formed, the positive electrode base, the negative electrode base, and the base body can be connected to different positions of the end plate.

In some embodiments, in a height direction of the main body portion, a distance between the third separation portion and a bottom surface of the main body portion is greater than a distance between each of the first separation portion and the second separation portion and the bottom surface of the main body portion. A part corresponding to the third separation portion is a base body to fix a CCS, and the CCS is usually a plate-like structure located at a top of the battery module and is arranged to be higher than a position of the output electrode. Therefore, by arranging the distance between the third separation portion and the bottom surface of the main body portion to be greater than the distance between each of the first separation portion and the second separation portion and the bottom surface of the main body portion, the formed base can be conveniently connected to the positive output electrode, the negative output electrode, and the CCS. In addition, since the distance between each of the first separation portion and the second separation portion and the bottom surface of the main body portion is relatively small, the positive electrode base and the negative electrode base can be arranged in the main body portion deeply, and a bonding strength between two ends of the base and the main body portion is strengthened.

In some embodiments, a groove wall of the groove is provided with a first concave portion, and the connection portion is provided with a convex portion corresponding to the first concave portion; or a groove wall of the groove is provided with a first convex portion, and the connection portion is provided with a concave portion corresponding to the first convex portion. Thus, the convex portion or concave portion on the connection portion can be clamped with the first concave portion or the first convex portion on the groove wall, such that the base is tightly connected to the main body portion.

In some embodiments, the base body is provided with a metallic insert configured to hoist the battery module. Thus, the battery module can be hoisted to any required position.

In a second aspect, the present application provides a battery module including the end plate described in the first aspect.

In a third aspect, the present application provides a battery including the battery module described in the second aspect.

In a fourth aspect, the present application provides an electric device including the battery module described in the third aspect, where the battery is provided to supply electric energy.

In a fifth aspect, the present application provides a manufacturing method of an end plate, including: providing a main body portion, where the main body portion is arranged at two ends of the battery module and is configured to fix a battery cell in the battery module; providing a separation portion, where the separation portion is located in the main body portion; and providing a base, where the base is configured to fix an output electrode of the battery module, and the separation portion is configured to separate the main body portion from the base.

The above descriptions only summarize the technical solutions of the present application. In order to make the technical means of the present application to be understood more clearly and implemented in accordance with the contents of the specification and in order to make the above and other objectives, features, and advantages of the present application to be more obvious and understandable, specific implementations of the present application are described below.

### BRIEF DESCRIPTION OF THE DRAWINGS

By reading the detailed description of the following preferred implementations, various other advantages and benefits will become apparent to those of ordinary skill in the art. The accompanying drawings are provided merely to illustrate the preferred embodiments, rather than to limit the present application. In the accompanying drawings, the same reference numerals represent the same components. In the accompanying drawings:
FIG. 1 is a schematic structural diagram of a vehicle in some embodiments of the present application;
FIG. 2 is a schematic structural diagram of a battery module in some embodiments of the present application;
FIG. 3 is a schematic structural diagram of a battery in some embodiments of the present application;
FIG. 4 is a schematic structural diagram of an end plate in some embodiments of the present application;
FIG. 5 is a cross-sectional enlarged partial view of an end plate in some embodiments of the present application; and
FIG. 6 is a flow chart of a manufacturing method of an end plate in some embodiments of the present application.

Reference numerals in embodiments are as follows:
vehicle: 800, motor: 400, controller: 300, battery: 500, case: 600, first housing: 601, second housing: 602,
battery module: 100, battery cell: 101, side plate: 102, CCS: 103, output electrode: 104, upper plate: 105,
end plate: 1, main body portion: 11, base: 12, separation portion: 13, groove: 15, connection portion: 16, step portion: 17, positive electrode base: 141, negative electrode base: 143, base body: 142, first groove: 151, second groove: 153, third groove: 152, first separation portion: 131, second separation portion: 133, third separation portion: 132, first concave portion: 15a, convex portion: 16a, and metallic insert: 18.

### DETAILED DESCRIPTION OF THE EMBODIMENTS

The embodiments of the technical solutions of the present application will be described in detail below with reference to the accompanying drawings. The following embodiments are used merely to clearly illustrate the technical solutions of the present application. Therefore, these embodiments are merely exemplary and are not intended to limit the protection scope of the present application.

Unless otherwise defined, all technical and scientific terms used in the present application have the same meanings as commonly understood by those skilled in the technical field of the present application. The terms used in the specification of the present application are merely intended to describe the specific embodiments, rather than limit the present application. The terms "includes" and "has" in the specification, claims, and accompanying drawings of the present application and any variations thereof are intended to encompass without excluding other content. The terms "first", "second", and the like in the specification and claims or the accompanying drawings of the present application are intended to distinguish different objects, rather than describe a specific order or a primary/secondary relationship.

The "embodiment" mentioned in the present application means that a specific feature, structure, or characteristic described in combination with the embodiment may be included in at least one embodiment of the present disclosure. The term appearing in different parts of the specification does not necessarily refer to the same embodiment or an independent or alternative embodiment exclusive of other embodiments. It may be explicitly or implicitly appreciated by those skilled in the art that the embodiments described in the present application may be combined with other embodiments.

In the description of the present application, it should be understood that, unless otherwise specified and defined, the terms "arrangement", "connected with", or "connected to" should be comprehended in a broad sense. For example, these terms may be comprehended as a fixed connection, a removable connection, or an integrated connection, may be a direct connection or an indirect connection through an intermediate medium, and may be an intercommunication between two components. Those of ordinary skill in the art may understand specific meanings of the above terms in the present application based on specific situations.

The term "and/or" in the present application merely describes an association relationship between associated objects, and indicates that there may be three types of relationships. For example, A and/or B may indicate that A exists alone, A and B coexist, or B exists alone. In addition, the character "/" in the present application generally indicates that the associated objects are in an "or" relationship.

"A plurality of" in the present application refers to two or more, and similarly, "a plurality of groups" refers to two or more groups and "a plurality of electrodes" refers to two or more electrodes.

In the present application, a battery cell may include a lithium-ion secondary battery, a lithium-ion primary battery, a lithium-sulfur battery (LSB), a sodium/lithium-ion battery, a sodium-ion battery (SIB), a magnesium-ion battery (MIB), or the like, but the embodiment of the present application is not limited thereto. A battery cell may be in a cylindrical shape, a flat shape, a cuboid shape, or another shape, but the embodiment of the present application is not limited thereto. The battery cell may generally include the following three types according to a packaging manner: a cylindrical battery cell, a cubical battery cell, and a pouch battery cell, but the embodiment of the present application is not limited thereto.

A battery mentioned in the embodiment of the present application refers to a single physical module including one or more battery cells to provide a high voltage and capacity. For example, the battery mentioned in the present application may include a battery module, a battery pack, or the like. The battery generally includes a case for packaging one or more battery cells. The case can prevent a liquid or another foreign matter from affecting the charge or discharge of a battery cell.

A battery cell includes an electrode assembly and an electrolyte, and the electrode assembly includes a positive electrode plate, a negative electrode plate, and a separator. The battery cell mainly relies on the migration of metal ions between the positive electrode plate and the negative electrode plate to work. The positive electrode plate includes a cathode current collector and a cathode active material layer, where the cathode active material layer covers a surface of the cathode current collector; a part of the current collector without the cathode active material layer protrudes from a part of the current collector with the cathode active material layer; and the part of the current collector without the cathode active material layer serves as a positive electrode tab. With an LIB as an example, a material of the cathode current collector can be aluminum, and a positive electrode active material can be lithium cobalt oxide (LCO), lithium iron phosphate (LFP), lithium nickel-manganese-cobalt oxide (LNMCO), lithium manganese oxide (LMO), or the like. The negative electrode plate includes an anode current collector and an anode active material layer, where the anode active material layer covers a surface of the anode current collector; a part of the current collector without the anode active material layer protrudes from a part of the current collector with the anode active material layer; and a part of the current collector without the anode active material layer serves as a negative electrode tab. A material of the anode current collector can be copper, and an anode active material can be carbon or silicon. In order to ensure that there is no fusing at a high current, a plurality of positive electrode tabs are provided and stacked together, and a plurality of negative electrode tabs are provided and stacked together. A material of the separator can be polypropylene (PP) or polyethylene (PE). Further, the electrode assembly may be in a wound structure or a laminated structure, and the embodiment of the present application is not limited thereto.

The battery module mentioned in the embodiment of the present application includes a plurality of battery cells and a frame structure to fix the plurality of battery cells, where the plurality of battery cells are arranged to be stacked. The frame structure includes an end plate, and the end plate is arranged at two ends of the battery module to limit the movement of the battery cells. In a specific embodiment, the frame structure may further include a side plate, and the end plate is fixedly connected to the side plate to clamp the battery cells. An output electrode and an output electrode base of a battery are arranged on an end plate, and an electrical signal inside a battery module is transmitted to an outside of the battery module through the output electrode. Typically, the end plate is connected to the output electrode base through plug-connection.

In such a structure, the base and the end plate are components independent of each other, and are manufactured separately and then used in combination through plug-connection, resulting in many components and many assembly interfaces. The separate manufacturing of these components leads to a high cost and too-many assembly interfaces, there are large gaps among the components, the components may loosen due to an insufficient bonding strength, and an assembly process of these components involves a high labor cost.

In view of this, the present application provides an end plate integrated with an output electrode base; and the end plate is provided for a battery module, and includes: a main body portion, where the main body portion is arranged at two ends of the battery module and is configured to fix a battery cell in the battery module; a base, where the base is configured to fix an output electrode of the battery module; and a separation portion, where the separation portion is located in the main body portion and is configured to separate the main body portion from the base. Therefore, under a separation function of the separation portion, a material for manufacturing the base can be integrally connected to the main body portion through injection-molding; compared with the existing assembly connection manner, the present application eliminates the assembly interfaces and gaps among the components, such that the base and the main body portion can be tightly connected and there is no need to manufacture the components separately, which effectively reduces a manufacturing cost; and under an action of the separation portion, a material for manufacturing the base will not flow to a position below the separation portion in a height direction of the end plate during molding, which ensures that the manufactured end plate has excellent appearance.

The technical solution described in the embodiment of the present application may be suitable for various devices using batteries, such as mobile phones, portable devices, laptops, electric notorcycles, electric toys, electric tools, electric vehicles, ships, and spacecraft. For example, the spacecraft includes airplanes, rockets, spaceshuttles, and spaceships.

It should be understood that the technical solution described in the embodiment of the present application is not limited to the device described above, and can also be suitable for all devices using batteries. However, for the sake of conciseness, the following embodiments are illustrated with an electric vehicle as an example.

Specific embodiments of the present application are described in detail below.

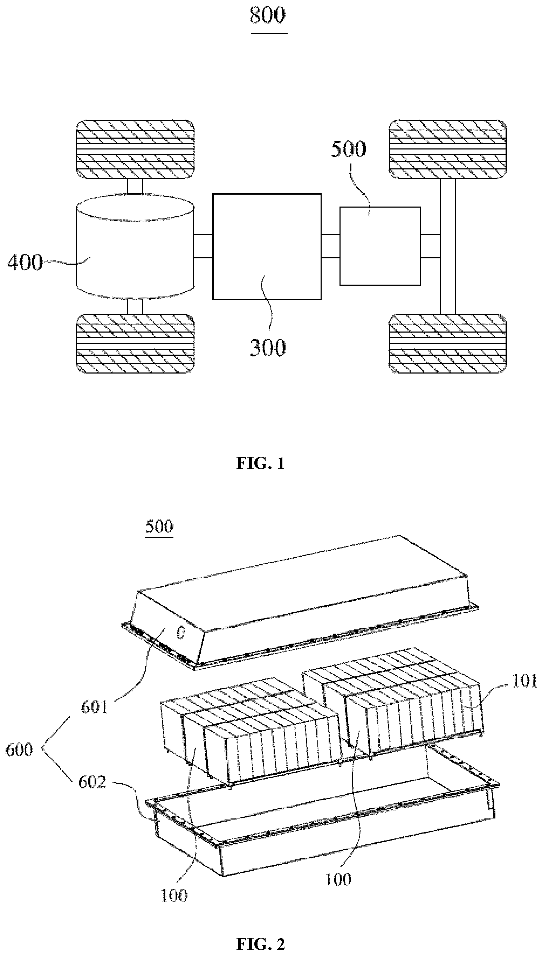

FIG. 1 is a schematic structural diagram of a vehicle 800 in an embodiment of the present application. The vehicle 800 may be a fuel vehicle, a gas vehicle, or a new energy vehicle, where the new energy vehicle may be a pure electric vehicle, a hybrid electric vehicle (HEV), or a range-extended electric vehicle (REEV). A motor 400, a controller 300, and a battery 500 may be provided in the vehicle, where the controller 300 is configured to control the battery 500 to power the motor 400. For example, the battery 500 can be arranged at a bottom, a front end, or a rear end of the vehicle. The battery 500 may be provided to power the vehicle, for example, the battery 500 may be used as an operating power supply of the vehicle to power a circuit system of the vehicle 800, for example, the battery may be used to meet power demands of starting, navigation, and operation of the vehicle 800. In another embodiment of the present application, the battery 500 can be used not only as an operating power supply of the vehicle 800, but also as a driving power supply of the vehicle 800, which can replace or partially replace a fuel or a natural gas to provide a driving power for the vehicle 800.

In order to meet different power needs, a battery may include a plurality of battery cells, where the plurality of battery cells can be connected in series, parallel, or parallel-series, where the parallel-series connection means that some battery cells are connected in series and some battery cells are connected in parallel. A battery can also be called a battery pack. Optionally, the plurality of battery cells may first be connected in series, parallel, or parallel-series to produce a plurality of battery modules, and then the plurality of battery modules may be connected in series, parallel, or parallel-series to produce a battery. That is, the plurality of battery cells can be directly used to produce a battery; or the plurality of battery cells can be first used to produce battery modules, and then the battery modules are used to produce a battery.

FIG. 2 is a schematic structural diagram of a battery 500 in an embodiment of the present application. The battery 500 may include a plurality of battery cells 101. The battery 500 may further include a case 600 (or an enclosure); and the case 600 has a hollow structure, and a plurality of battery cells 1 are accommodated in the case 600. As shown in FIG. 2, the case 600 may include a first housing 601 and a second housing 602, and the first housing 601 and the second housing 602 are snapped to each other. Shapes of the first housing 601 and the second housing 602 may be determined according to a shape of an assembly of a plurality of battery cells 101; and the first housing 601 and the second housing 602 each have an opening. For example, the first housing 601 and the second housing 602 may each be a hollow cuboid and each include one face as an opening face, an opening of the first housing 601 and an opening of the second housing 602 are arranged oppositely, and the first housing 601 and the second housing 602 are snapped to each other to form the case with a closed chamber. A plurality of battery cells 101 are connected in parallel, series, or parallel-series, and then placed in the case formed after the first housing 601 and the second housing 602 are snapped to each other.

According to different power needs, any number of battery cells 101 may be provided. A plurality of battery cells 101 may be connected in series, parallel, or parallel-series to allow a high capacity or power. Since each battery 500 may include a large number of battery cells 101, in order to facilitate arrangement, the battery cells 101 may be arranged in groups, and each group of battery cells 101 constitutes a battery module 100. The battery module 100 may include any number of battery cells 101, and the number of battery cells may be set according to needs. For example, a battery may include a plurality of battery modules 100, and the plurality of battery modules may be connected in series, parallel, or parallel-series.

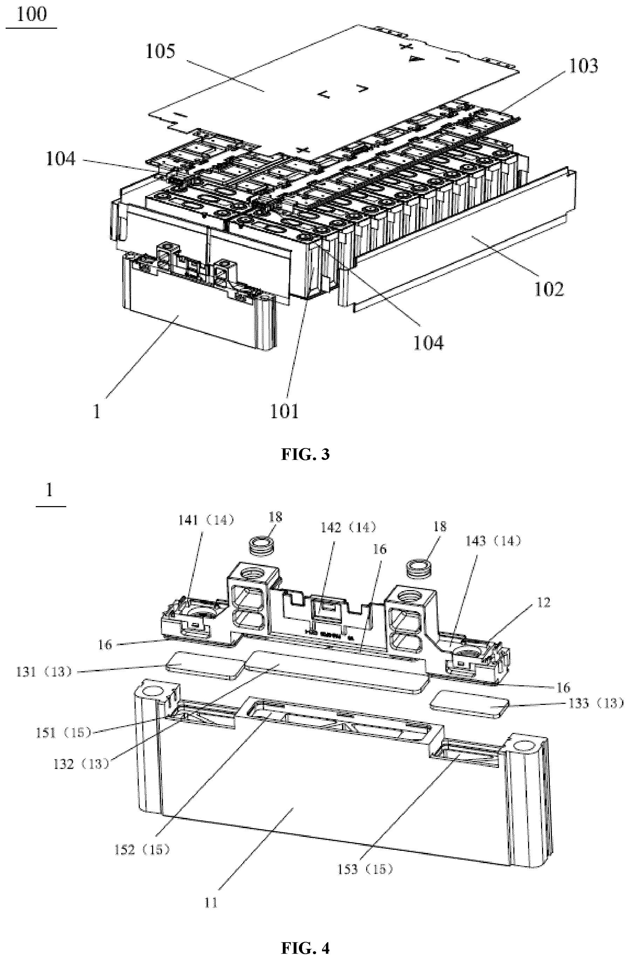

FIG. 3 is an exploded view of a battery module 100 in some embodiments of the present application. As shown in FIG. 3, a battery module 100 includes a plurality of battery cells 101 and a frame structure to fix the plurality of battery cells 101, where the plurality of battery cells 101 are stacked in a length direction. The frame structure includes an end plate 1, and the end plate 1 is located at two ends of each of the plurality of battery cells 101 in the length direction to limit the movement of the plurality of battery cells 101 in the length direction. In a specific embodiment, the frame structure may further include a side plate 102 and an upper plate 105, where the side plate 102 is located on two sides of each of the plurality of battery cells 101 in a width direction, and the side plate is connected to the end plate 1 to form the frame structure. In another preferred embodiment, the frame structure may not be provided with a side plate, the plurality of battery cells 101 are connected through a cable tie after being stacked, and the end plate 1 and the cable tie form the frame structure. The battery module 100 further includes CCS 103, and CCS 103 includes two output electrodes 104 configured to draw out electric energy of the battery module 100; and the two output electrodes 104 are a positive output electrode and a negative output electrode, respectively.

FIG. 4 is an exploded view of an end plate 1 in some embodiments of the present application. As shown in FIG. 3 and FIG. 4, the end plate 1 includes a main body portion 11, a base 12, and a separation portion 13, where the main body portion 11 is arranged at two ends of the battery module 100 and is configured to fix a battery cell 101 in the battery module 100; the base 12 is configured to fix an output electrode 104 of the battery module 100; and the separation portion 13 is located in the main body portion 11 and is configured to separate the main body portion 11 from the base 12.

Under a blocking action of the separation portion 13, the base 12 may be connected through injection-molding of a material on the main body portion 11 to produce an end plate 1 integrated with an output electrode base. Due to an action of the separation portion 13, when a material for manufacturing the base 12 is injected into the main body portion 11, the material will not overflow to a position below the separation portion 13 in a height direction of the end plate 1, such that the base 12 is smoothly and tightly connected to a part above the separation portion 13 in the main body portion 11, the manufactured end plate 1 has excellent smooth appearance, and there will be no phenomena such as burrs and overflows due to overflow of the material. Compared with a structure in which a manufactured base is assembled to an end plate in the prior art, the end plate 1 of the present application integrates a function of the base, directly reduces a number of components, and can eliminate the assembly interfaces and gaps between the main body portion 11 and the base 12, such that the main body portion 11 and the base 12 are tightly connected. In addition, the present application can reduce a cost of separate manufacturing of the main body portion 11 and the base 12 and a cost of an assembly procedure.

The separation portion 13 is usually a plate-shaped sheet made of a metallic material, such as an aluminum sheet and a copper sheet, but a material and shape of the separation portion 13 are not limited thereto, as long as the base 12 and the main body portion 11 can be separated to prevent a material of the base 12 from flowing to a position below the separation portion 13 in the main body portion 11.

In some embodiments, the main body portion 11 is made of a metallic material, and/or the base 12 is made of a plastic material. Since the main body portion 11 mainly undergoes an expansion force from an inside of the battery module 100, the main body portion 11 made of a metallic material can fully withstand the expansion force to prevent the end plate 1 from fracturing.

The base 12 may be made of the same metallic material as the main body portion 11, for example, the main body portion 11 and the base 12 each are formed through aluminum extrusion. However, in some embodiments, the base 12 is made of a plastic material. Compared with the case where a metallic material is also used to manufacture the base 12, the use of a plastic to manufacture the base can greatly reduce the consumption of the metallic material and ensure a low cost.

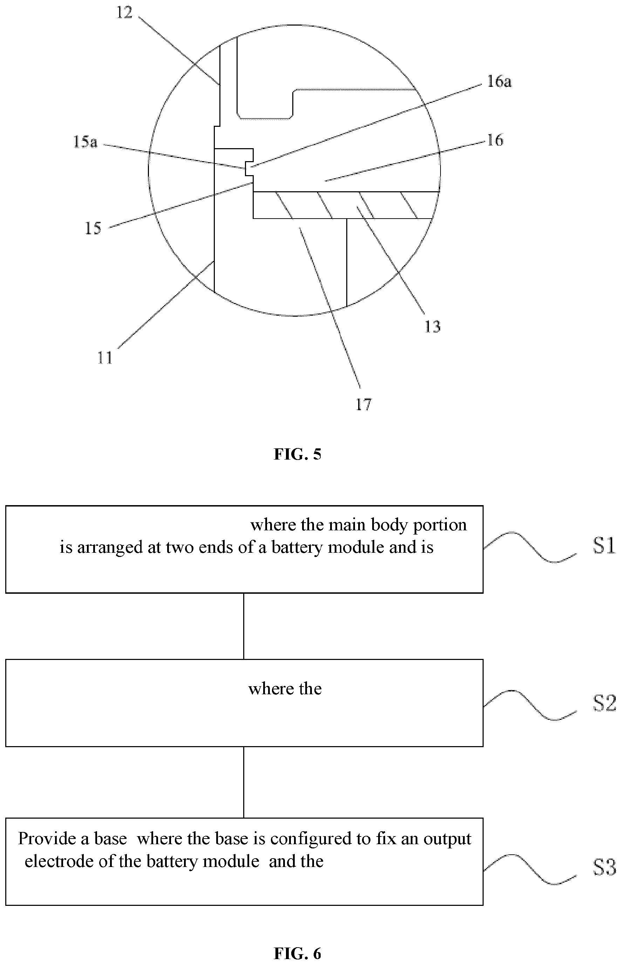

FIG. 5 is a partial cross-sectional enlarged view of an end plate 1 in some embodiments of the present application, and shows a state in which the base 12 is connected to the main body portion 11. In some embodiments, as shown in FIG. 4 and FIG. 5, the main body portion 11 includes a groove 15, and the separation portion 13 is located in the groove 15; and the base 12 includes a connection portion 16, and the connection portion 16 abuts against the separation portion 13 and is fixedly connected to the main body portion 11. Since the separation portion 13 is located in the groove 15, when the base 12 is connected through injection-molding to the main body portion 11, a material of the base 12 enters the groove 15 and touches the separation portion 13, the material located in the groove 15 is molded into the connection portion 16 of the base 12, and after the molding, the connection portion 16 is fixedly connected to the main body portion 11.

In some embodiments, as shown in FIG. 5, a step portion 17 is provided in the groove 15, and the separation portion 13 abuts against the step portion 17. With the step portion 17, the plate-shaped separation portion 13 may be easily placed in the groove 15. In addition, when the base 12 is connected to the main body portion 11, the separation portion 13 can completely close a space below the separation portion 13, thereby preventing a material from overflowing into an inside of the main body portion 1 when the base 12 is formed. After the end plate 1 is manufactured, the separation portion 13 is clamped between the step portion 17 and the connection portion 16 to become a part of the end plate 1. However, the present application is not limited to such a structure, and the separation portion 13 and the main body portion 11 may also be integrally formed.

In addition, preferably, two ends of each groove 15 each are provided with a step portion 17 in a length direction of the end plate 1, and two ends of the separation portion 13 in the length direction of the end plate 1 abut against the step portions 17 at the two ends. Further, the step portions 17 may also be arranged at two ends of the groove 15 in a width direction of the end plate 1, or one step portion 17 is formed along a periphery of the groove 15, or a plurality of step portions 17 are formed along the periphery of the groove 15. In some embodiments, as shown in FIG. 4, the base 12 includes a positive electrode base 141, a negative electrode base 143, and a base body 142, where the positive electrode base 141 and the negative electrode base 143 are respectively arranged at two ends of the base body 142 in a length direction of the end plate 1, and the positive electrode base 141, the negative electrode base 143, and the base body 142 are integrally formed.

The positive electrode base 141 is configured to fix a positive output electrode of the battery module 100, the negative electrode base 143 is configured to fix a negative output electrode of the battery module 100, and the base body 142 is configured to fix CCS 103 in the battery module. In the prior art, a positive electrode base, a negative electrode base, and a base body are separate components, and these components are assembled to an end plate separately and are connected to each other through assembly. In the present application, the positive electrode base 141, the negative electrode base 143, and the base body 142 are integrally formed into the base 12, which can directly reduce a number of components, avoid a process of manufacturing the components separately and a process of plug-connection assembly, eliminate an assembly interface and gap, and make the components tightly connected with each other to prevent the components from falling off and loosening.

In some embodiments, as shown in FIG. 4, the groove 15 includes a first groove 151, a second groove 153, and a third groove 152 corresponding to the positive electrode base 141, the negative electrode base 143, and the base body 142, respectively. By arranging the first groove 151, the second groove 153, and the third groove 152 corresponding to the positive electrode base 141, the negative electrode base 143, and the base body 142, respectively, the positive electrode base 141, the negative electrode base 143, and the base body 142 can be accurately connected to predetermined positions of the main body portion 11 when the base 12 is formed and connected to the main body portion 11; and the arrangement of the plurality of grooves 15 makes a plurality of connection structures formed between the base 12 and the main body portion 11, which can make the base 12 and the main body portion 11 tightly connected.

In some embodiments, as shown in FIG. 4, the separation portion 13 includes a first separation portion 131, a second separation portion 133, and a third separation portion 132; and the first separation portion 131 is located in the first groove 151, the second separation portion 133 is located in the second groove 153, and the third separation portion 132 is located in the third groove 152. Thus, the first separation portion 131 closes the first groove 151, the second separation portion 133 closes the second groove 153, and the third separation portion 132 closes the third groove 152. Since arrangement positions of a positive output electrode, a negative output electrode, and CCS 103 in different battery modules 100 are determined according to different requirements, arrangement positions of the positive electrode base 141, the negative electrode base 143, and the base body 142 for fixing the positive output electrode, the negative output electrode, and the CCS 103 are determined according to the requirements. By allowing the first separation portion 131 to close the first groove 151, the second separation portion 133 to close the second groove 153, and the third separation portion 132 to close the third groove 152, when the base 12 is formed, specific positions of the positive electrode base 141, the negative electrode base 143, and the base body 142 connected to the main body portion 11 in a height direction are determined according to arrangement positions of the first separation portion 131, the second separation portion 133, and the third separation portion 132, such as to meet the various design requirements of the battery module 100.

In some embodiments, as shown in FIG. 4, the base 12 includes three connection portions 16 located at a bottom of the positive electrode base 141 in a height direction, a bottom of the negative electrode base 143 in a height direction, and a bottom of the base body 142 in a height direction, respectively; and the three connection portions 16 extend into the first groove 151, the second groove 153, and the third groove 152, respectively, abut against the first separation portion 131, the second separation portion 133, and the third separation portion 132, respectively, and thus are connected to the main body portion 11.

In some embodiments, as shown in FIG. 4, in a height direction of the main body portion 11, a distance between the third separation portion 132 and a bottom surface of the main body portion 11 is greater than a distance between each of the first separation portion 131 and the second separation portion 133 and the bottom surface of the main body portion 11. A part corresponding to the third separation portion 132 is a base body 142 to fix CCS 103. For example, as shown in FIG. 3, the CCS 103 is a plate-like structure located at a top of the battery module 100 and is arranged slightly higher than the output electrode 104. Therefore, by setting the distance between the third separation portion 132 and the bottom surface of the main body portion 11 to be greater than the distance between each of the first separation portion 131 and the second separation portion 133 and the bottom surface of the main body portion 11, the formed base 12 can be conveniently connected to the output electrode 104 and the CCS 103. In addition, since the distance between each of the first separation portion 131 and the second separation portion 133 and the bottom surface of the main body portion 11 is relatively small, the positive electrode base 141 and the negative electrode base 143 can be arranged in the main body portion deeply, and a bonding strength between two ends of the base 12 and the main body portion 11 is strengthened.

In some embodiments, a groove wall of the groove 15 is provided with a first concave portion, and the connection portion 16 is provided with a convex portion corresponding to the first concave portion; or a groove wall of the groove 15 is provided with a first convex portion, and the connection portion 16 is provided with a concave portion corresponding to the first convex portion. For example, as shown in FIG. 5, a groove wall of the groove 15 is provided with a first concave portion 15a, and the connection portion 16 is provided with a convex portion 16a corresponding to the first concave portion. With the first concave portion 15a on the groove wall of the groove 15, when a material of the base 12 is injected to the main body portion 11, the material of the base 12 naturally flows into the first concave portion 15a and is molded to form the convex portion 16a protruding into the first concave portion 15a, and there is almost no gap between the first concave portion 15a and the convex portion 16a. Thus, the base 12 and the main body portion 11 are tightly connected, which improves the pull-off resistance between the base 12 and the main body portion 11. In addition, a groove wall of the groove 15 may also be provided with a first convex portion, and in this case, when a material of the base 12 is injected to the main body portion 11, the material of the base 12 naturally wraps the first convex portion and then is molded to form a concave portion corresponding to the first convex portion, and there is almost no gap between the first convex portion and the concave portion, which can make the base 12 and the main body portion 11 tightly connected and improve the pull-off resistance between the base 12 and the main body portion 11.

Preferably, a first concave portion 15a or a first convex portion is provided in each groove 15, and each connection portion 16 is provided with a convex portion 16a corresponding to the first concave portion 15a or a concave portion corresponding to the first convex portion, which further improves the pull-off resistance between the base 12 and the main body portion 11. Further, a first concave portion 15a or a first convex portion may be provided on an inner wall of each of two ends of each groove 15 in a length direction, and each of two ends of each connection portion 16 in a length direction is provided with a convex portion 16a corresponding to the first concave portion 15a or a concave portion corresponding to the first convex portion, such that the connection portion 16 is clamped with the groove 15 at two ends, which further improves the pull-off resistance between the base 12 and the main body portion 11. A first concave portion 15a or a first convex portion may also be formed around the entire inner wall of the groove 15, and a plurality of first concave portions 15a or first convex portions may also be formed on the inner wall of the groove 15.

In some embodiments, as shown in FIG. 4, the base body 142 is provided with a metallic insert 18 configured to hoist the battery module 100. For example, a metallic insert 18 is embedded at each of two ends of each base body 142 in a length direction, and thus the battery module 100 may be hoisted to an appropriate position through four metallic inserts 18 on two end plates 1.

The end plate 1 in the embodiment of the present application is described above.

In an aspect, the present application also provides a battery module 100 including the end plate 1 described above.

In an aspect, the present application also provides a battery 500 including the battery module 100 described above.

In an aspect, the present application also provides an electric device including the battery 500 described above, where the battery is provided to supply electric energy. Optionally, the electric device may be a vehicle 800 shown in FIG. 1, and may also be a ship or a spacecraft.

The present application also provides a manufacturing method of an end plate.

FIG. 6 is a flow chart of a manufacturing method of an end plate 1 in an embodiment of the present application.

As shown in FIG. 6, the manufacturing method of the end plate 1 in this embodiment includes:
S 1: A main body portion 11 is provided and arranged at two ends of the battery module 100 to fix a battery cell 101 in the battery module 100.
S2: A separation portion 13 is provided and arranged in the main body portion 11.
S3: Abase 12 is provided, where the base 12 is configured to fix an output electrode 104 of the battery module 100, and the separation portion 13 is configured to separate the main body portion 11 from the base 12.

Specifically, for example, a main body portion 11 is first manufactured through a mold for the main body portion 11, where the manufactured main body portion 11 includes the groove 15 described above, a step portion 17, and a second concave portion 19; a first concave portion 15a is formed on the groove 15; a separation portion 13 is placed on the step portion 17 and fixed to cover a bottom of the groove 15; then the main body portion 11 with the separation portion 13 fixed is placed in a mold for injection-molding of a base 12, and a material for injection-molding of the base 12 is injected; a part of the material of the base 12 that enters the groove 15 forms a connection portion 16, a part of the material that enters the first concave portion 15a forms a first convex portion 16a, and a part of the material that enters the second concave portion 19 forms a second connection portion 18, such that the base 12 with a shape shown in FIG. 4 is finally formed.

In a preferred embodiment, the main body portion 11 is made of a metallic material, and the main body portion 11 is formed through extrusion-molding or die-casting.

In a preferred embodiment, the base 12 is made of a plastic material, and the base 12 is formed through injection-molding on the main body portion 11 based on a separation function of the separation portion 13.

Finally, it should be noted that the above embodiments are provided merely for describing the technical solutions of the present application, but not for limiting the present application. Although the present application is described in detail with reference to the above embodiments, a person of ordinary skill in the art should understand that they may still make modifications to the technical solutions described in the above embodiments or make equivalent replacements to some or all technical features thereof; and these modifications or replacements do not make the essence of the corresponding technical solution depart from the scope of the technical solutions of the embodiments of the present application, and shall fall within the scope of claims and specification of the present application. In particular, as long as there is no structural conflict, the technical features in the embodiments may be combined in any way. The present application is not limited to the specific embodiments disclosed herein, but should include all technical solutions falling within the scope of the claims.

## Claims

1. An end plate for a battery module, comprising:
a main body portion arranged at two ends of the battery module and configured to fix a battery cell in the battery module;
a base configured to fix an output electrode of the battery module; and
a separation portion located in the main body portion and configured to separate the main body portion from the base.

2. The end plate according to claim 1, wherein the main body portion is made of a metallic material, and/or the base is made of a plastic material.

3. The end plate according to claim 1 or 2, wherein,
the main body portion comprises a groove, and the separation portion is located in the groove; and the base comprises a connection portion, and the connection portion abuts against the separation portion and is fixedly connected to the main body portion.

4. The end plate according to claim 3, wherein,
a step portion is provided in the groove, and the separation portion abuts against the step portion.

5. The end plate according to any one of claims 1 to 4, wherein,
the base comprises a positive electrode base, a negative electrode base, and a base body, the positive electrode base and the negative electrode base are respectively arranged at two ends of the base body in a length direction of the end plate, and the positive electrode base, the negative electrode base, and the base body are integrally formed.

6. The end plate according to claim 5, wherein,
the groove comprises a first groove, a second groove, and a third groove corresponding to the positive electrode base, the negative electrode base, and the base body, respectively.

7. The end plate according to any one of claims 1 to 6, wherein the separation portion comprises a first separation portion, a second separation portion, and a third separation portion; and the first separation portion is located in the first groove, the second separation portion is located in the second groove, and the third separation portion is located in the third groove.

8. The end plate according to claim 7, wherein in a height direction of the main body portion, a distance between the third separation portion and a bottom surface of the main body portion is greater than a distance between each of the first separation portion and the second separation portion and the bottom surface of the main body portion.

9. The end plate according to any one of claims 3 to 8, wherein,
a groove wall of the groove is provided with a first concave portion, and the connection portion is provided with a convex portion corresponding to the first concave portion; or
a groove wall of the groove is provided with a first convex portion, and the connection portion is provided with a concave portion corresponding to the first convex portion.

10. The end plate according to any one of claims 2 to 9, wherein,
the base body is provided with a metallic insert configured to hoist the battery module.

11. A battery module, comprising the end plate for the battery module according to any one of claims 1 to 10.

12. A battery, comprising the battery module according to claim 11.

13. An electric device, comprising the battery according to claim 12, wherein the battery is provided to supply electric energy.

14. A manufacturing method of an end plate, comprising:
providing a main body portion, wherein the main body portion is arranged at two ends of the battery module and is configured to fix a battery cell in the battery module;
providing a separation portion, wherein the separation portion is located in the main body portion; and
providing a base, wherein the base is configured to fix an output electrode of the battery module, and
wherein the separation portion is configured to separate the main body portion from the base.

15. The manufacturing method according to claim 14, wherein,
the main body portion is made of a metallic material, and the main body portion is formed through extrusion-molding or die-casting.

16. The manufacturing method according to claim 14 or claim 15, wherein,
the base is made of a plastic material, and the base is formed through injection-molding on the main body portion based on a separation function of the separation portion.
